# FASCICULE DE BREVET EUROPEEN

(11) **EP 2 492 540 B1**
(45) Date de publication et mention de la délivrance du brevet: **06.03.2019**
(21) Numéro de dépôt: 12156241.7
(22) Date de dépôt: 20.02.2012
(51) Int. Cl.: F16F 15/131

(54) **Double volant amortisseur, en particulier pour véhicule automobile**
Zweimassenschwingungsdämpfer, insbesondere für Kraftfahrzeug
Double damping flywheel, in particular for an automobile

(30) Priorité: 25.02.2011 FR 1151531
(43) Date de publication de la demande: 29.08.2012
(73) Titulaire: Valeo Embrayages, 80009 Amiens Cedex 2 (FR)
(72) Inventeur: Dequesnes, Laurent, 80800 Fouilloy (FR)
(74) Mandataire: Cardon, Nicolas

(56) Documents cités:
- WO-A2-2005/064197
- DE-C1- 19 716 487
- FR-A1- 2 618 200
- US-A- 4 889 218

## Description

La présente invention concerne un double volant amortisseur, en particulier pour véhicule automobile.

Un double volant amortisseur comporte un volant d'inertie primaire destiné à être couplé en rotation à un arbre menant tel qu'un vilebrequin d'un moteur et un volant d'inertie secondaire destiné à être couplé à un arbre mené tel qu'un arbre d'entrée d'une boîte de vitesses. Un amortisseur de torsion est généralement monté entre les volants primaire et secondaire pour transmettre un couple de rotation entre les volants en absorbant et amortissant les vibrations et les acyclismes de rotation générés par le moteur.

Comme cela est décrit dans le document DE 10 2008 013 576, l'amortisseur de torsion peut être centré par rapport au volant primaire par l'intermédiaire de rondelles élastiques d'étanchéité.

Dans ce cas, un déplacement axial relatif d'un volant par rapport à l'autre est possible, dans deux directions opposées parallèles à l'axe de rotation des volants, par compression axiale de l'une ou de l'autre des rondelles élastiques d'étanchéité.

Ce déplacement axial doit être limité afin de ne pas endommager les rondelles d'étanchéité. Pour cela, le document DE 10 2008 013 576 prévoit d'équiper le volant primaire et un élément de l'amortisseur de torsion solidaire du volant secondaire de butées visant à limiter le déplacement axial précité dans une direction correspondant au rapprochement des deux volants.

Le déplacement axial relatif dans le sens de l'éloignement des volants n'étant pas empêché, des dégradations des rondelles d'étanchéité restent possibles pendant le fonctionnement du double volant amortisseur et aussi pendant les phases de manipulation, de montage ou de démontage du double volant amortisseur. En effet, les volants en raison de leurs poids élevés, peuvent être amenés à basculer ou à se déplacer l'un par rapport à l'autre lors de telles manipulations. Le document DE 197 16 487 C1 décrit un amortisseur similaire comportant un palier qui limite le déplacement axial d'un volant par rapport à l'autre et qui est formé en une seule pièce avec le moyeu du volant.

L'invention a notamment pour but d'apporter une solution simple, efficace et économique à ce problème.

A cet effet, elle propose un double volant amortisseur, en particulier pour véhicule automobile, comprenant un volant d'inertie primaire, un volant d'inertie secondaire et un amortisseur de torsion monté entre les volants primaire et secondaire pour transmettre un couple entre les volants et absorber et amortir les vibrations et les acyclismes de rotation, l'amortisseur de torsion étant centré par rapport au volant primaire par l'intermédiaire de rondelles élastiques d'étanchéité, caractérisé en ce qu'il comprend des moyens de limitation du déplacement axial d'un volant d'inertie par rapport à l'autre dans deux directions opposées parallèles à l'axe de rotation des volants.

De cette manière, on évite toute dégradation des rondelles élastiques d'étanchéité.

Selon une caractéristique de l'invention, les volants d'inertie comprennent des moyeux équipés de butées complémentaires limitant le déplacement axial d'un volant par rapport à l'autre dans les deux directions précitées.

Avantageusement, le moyeu d'un des volants comporte une gorge dans laquelle est monté fixement un jonc annulaire, le moyeu de l'autre volant comportant une gorge dans laquelle le jonc annulaire précité est inséré en partie et est axialement déplaçable de façon à limiter le déplacement axial d'un volant par rapport à l'autre par butée du jonc annulaire contre les parois latérales de la gorge dudit autre volant.

Le jonc annulaire est apte à supporter de fortes contraintes de cisaillement. Il est donc capable de résister à des efforts axiaux très importants.

Selon une autre caractéristique de l'invention, le jonc annulaire est monté fixe dans une gorge du moyeu du volant d'inertie primaire et est axialement déplaçable dans une gorge du moyeu du volant d'inertie secondaire, cette dernière gorge étant située radialement à l'intérieur du jonc annulaire.

Le volant primaire peut être un volant axialement flexible et le déplacement axial d'un volant par rapport à l'autre peut être limité à 1 mm, préférentiellement à 0,7 mm.

Le jonc annulaire est par exemple un jonc annulaire élastique fendu monté avec précontrainte dans la gorge précitée du volant primaire.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective éclatée d'un double volant amortisseur selon l'invention,
- la figure 2 est une vue en perspective avec arrachement partiel, d'une partie du double volant amortisseur de la figure 1,
- la figure 3 est une demi-vue en coupe axiale du double volant amortisseur des figures 1 et 2,
- la figure 4 est une vue agrandie d'une partie de la figure 3.

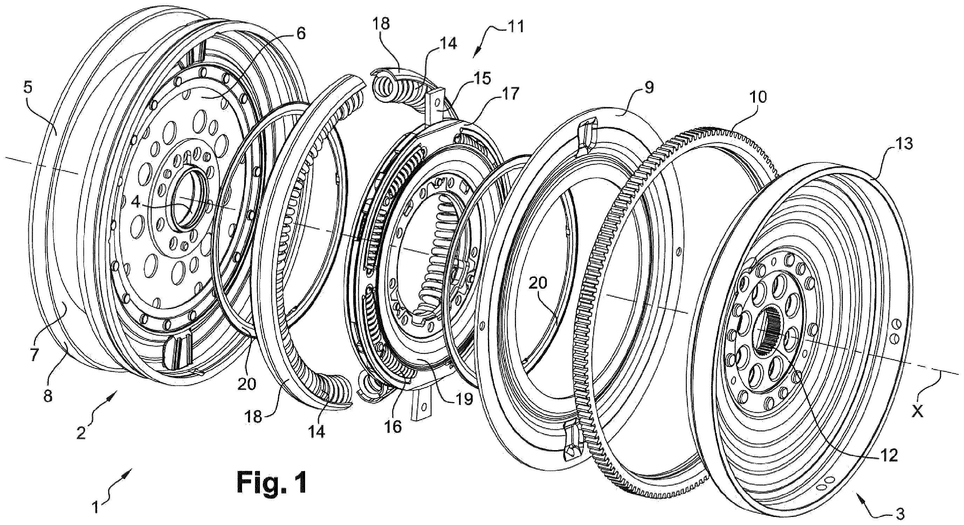

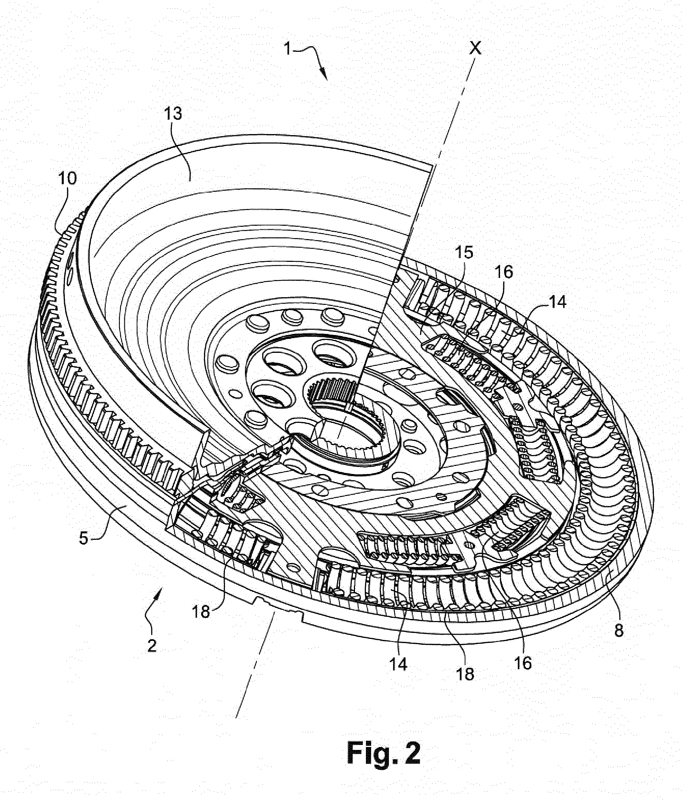

On a représenté sur les figures 1 à 4 un double volant amortisseur 1 selon un exemple de réalisation de l'invention, destiné à être associé à un embrayage de véhicule automobile. De manière classique, un tel ensemble est destiné à coupler un moteur, par exemple un moteur de type Diesel, avec une boîte de vitesses du véhicule automobile.

Le double volant amortisseur 1 est destiné à être solidarisé en rotation avec un vilebrequin du moteur, à l'aide de moyens classiques de fixation, par exemple à vis.

Le double volant amortisseur 1 comporte un volant d'inertie primaire 2 et un volant d'inertie secondaire 3, sensiblement coaxiaux et déplaçables en rotation autour de leur axe commun X.

Le volant primaire 2 comporte un moyeu radialement interne 4, destiné à porter les moyens de fixation sur le vilebrequin, et relié à une masse d'inertie 5, de préférence en fonte ou en acier et de forme générale de révolution, par l'intermédiaire de deux disques en tôle 6 flexibles et axialement empilés. La masse d'inertie 5 comporte une partie annulaire 7 s'étendant radialement, et une partie cylindrique 8 s'étendant du côté opposé du moteur depuis la périphérie externe de la partie annulaire 7.

Un couvercle annulaire 9 portant une couronne dentée de démarreur 10 est fixé sur l'extrémité libre de la partie cylindrique 8 de la masse d'inertie 5. Ce couvercle annulaire 9 s'étend radialement et délimite avec la masse d'inertie 5 un volume interne dans lequel est logé un amortisseur de torsion 11 décrit plus en détail ci-après.

Le volant secondaire 3 comporte un moyeu 12 couplé à une masse d'inertie 13, par exemple en fonte, destinée à former le plateau de réaction d'un embrayage.

Le moyeu 12 du volant secondaire 3 comporte un nez cylindrique qui s'étend à l'intérieur du moyeu 4 du volant primaire 2.

L'amortisseur de torsion 11 est monté entre les volants primaire 2 et secondaire 3 pour transmettre un couple de rotation entre les volants 2, 3 et absorber et amortir les vibrations et les acyclismes de rotation.

L'amortisseur de torsion 11 comporte deux groupes d'organes élastiques tels que des ressorts à spires hélicoïdales, un premier groupe de ressorts externes 14 s'étendant circonférentiellement entre le volant primaire 2 et un voile annulaire 15 pivotant autour de l'axe X, un second groupe de ressorts internes 16 s'étendant circonférentiellement entre le voile annulaire 15 et des rondelles de guidage 17 fixées, à leur périphérie interne, sur le volant secondaire 3 et disposées axialement de part et d'autre du voile annulaire 15.

Des goulottes de guidage 18, dans lesquelles coulissent les ressorts externes 14 sont intercalées entre la partie cylindrique 8 de la masse d'inertie 5 et chacun de ces ressorts 4.

Le fonctionnement d'un tel amortisseur de torsion 11, bien connu de l'homme du métier, ne sera pas décrit plus en détail ici.

L'amortisseur de torsion 11 est centré par rapport au volant primaire 2 par l'intermédiaire de rondelles élastiques d'étanchéité radiales 19. Plus particulièrement, les rondelles d'étanchéité 19 sont fixées, à leur périphérie radialement interne, aux rondelles de guidage 17 et sont en appui, à leur périphérie radialement externe, sur des surfaces d'appui de la masse d'inertie 5 et du couvercle 9 du volant primaire 2, formées par des rondelles 20 montées en périphérie interne de la masse d'inertie 5 et du couvercle 9. Les rondelles d'étanchéité 19 définissent ainsi, avec la masse d'inertie 5 et le couvercle 9, un volume étanche dans lequel sont logés les ressorts 14, 16 en vue d'y maintenir un lubrifiant.

Afin de limiter le déplacement axial d'un volant d'inertie par rapport à l'autre et éviter une dégradation des rondelles d'étanchéité 19, le moyeu 4 du volant primaire 2 comporte dans sa surface cylindrique interne une gorge 21 dans laquelle est monté avec précontrainte un jonc annulaire 22 fendu.

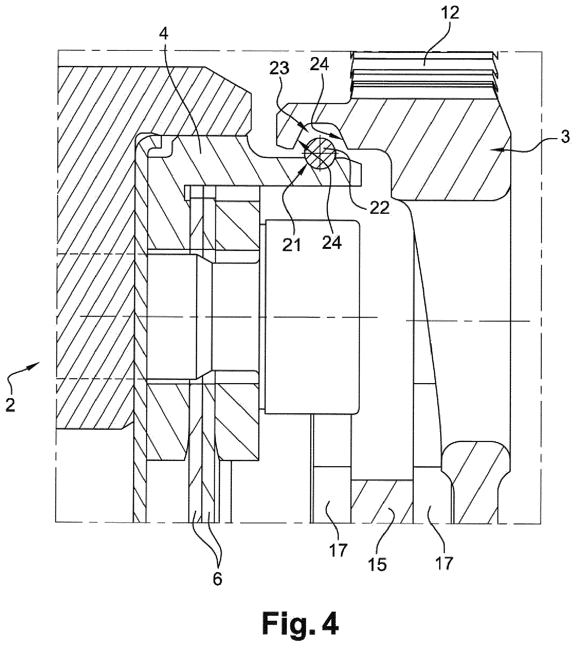

Le nez du moyeu 12 du volant secondaire 3, qui s'étend à l'intérieur du moyeu 4 du volant primaire 2, comporte dans sa surface cylindrique externe une gorge 23 plus large dans laquelle le jonc annulaire précité 22 est logé en partie et est axialement déplaçable de façon à limiter le déplacement axial d'un volant par rapport à l'autre par butée contre les parois latérales 24 (figure 4) de la gorge 23 du volant secondaire 3.

Les parois latérales 24 de la gorge 23 sont sensiblement planes et inclinées de façon à s'écarter l'une de l'autre vers l'extérieur. L'angle d'inclinaison entre chacune des parois 24 et le plan radial est compris entre 0 et 45°.

Le jonc annulaire 22 est en en acier élastique, de type C67 ou 100C6 par exemple. Le jonc annulaire 22 a une section ronde de diamètre compris entre 1 et 5 mm, la gorge 21 du moyeu 4 du volant primaire 2 ayant également une section arrondie complémentaire, de profondeur comprise entre 1 et 5 mm.

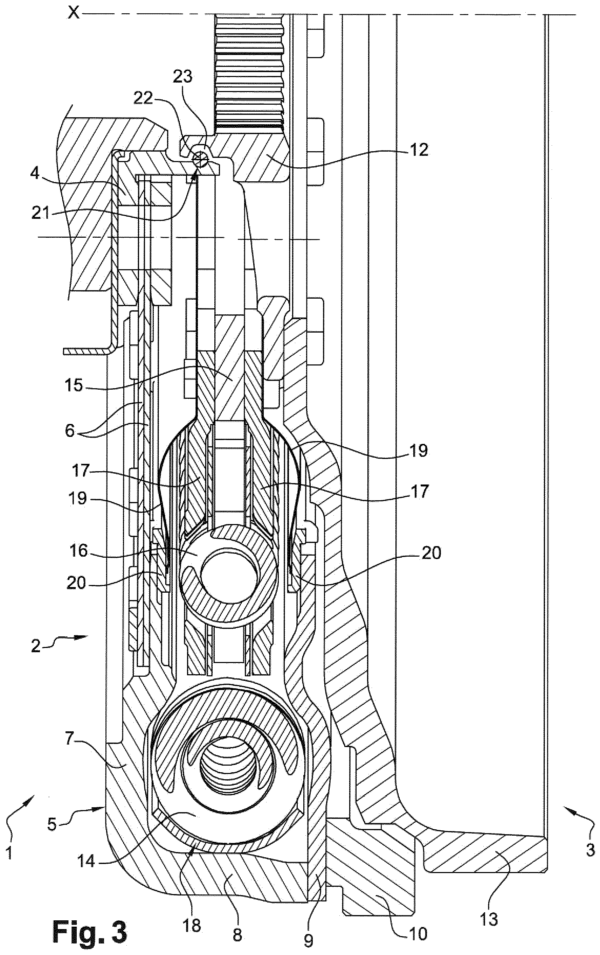

La gorge 23 du moyeu 12 du volant secondaire 3 a une profondeur supérieure au diamètre du jonc 22, préférentiellement de 1 mm supérieure au diamètre du jonc 22. Ceci permet, lors du montage du double volant amortisseur 1, de forcer complètement le jonc 22 dans la gorge 23 du moyeu 12 du volant secondaire 3, puis de monter le moyeu 12 du volant secondaire 3 dans le moyeu 4 du volant primaire 2, le jonc 22 retrouvant la position représentée aux figures 3 et 4 (dans la gorge 21 du moyeu 4 du volant primaire 2) par élasticité.

Les dimensions du jonc annulaire 22 et de la gorge 23 du volant secondaire 3 sont telles que le déplacement axial d'un volant par rapport à l'autre est limité à 1 mm, préférentiellement à 0,7 mm.

Le double volant amortisseur 1 selon l'invention permet de limiter le déplacement d'un volant par rapport à l'autre dans deux directions opposées parallèles à l'axe X de rotation des volants 2, 3, de manière à éviter toute dégradation des rondelles d'étanchéité 19 lors du fonctionnement du double volant amortissement 1 ou lors de manipulations de celui-ci, par exemple lors de son montage ou lors de son démontage. Le fort déplacement du volant primaire vers le volant secondaire, qui peut se produire lors d'un démarrage à froid dans un double volant amortisseur équipé d'un volant primaire axialement flexible, est ainsi limité par les butées selon l'invention, avant d'avoir abîmé les rondelles d'étanchéité 19.

On peut également manipuler le double volant amortisseur en le tenant par le volant secondaire sans risquer d'abîmer ces rondelles d'étanchéité.

## Revendications

1. Double volant amortisseur (1), en particulier pour véhicule automobile, comprenant un volant d'inertie primaire (2), un volant d'inertie secondaire (3) et un amortisseur de torsion (11) monté entre les volants primaire et secondaire (2, 3) pour transmettre un couple entre les volants (2, 3) et absorber et amortir les vibrations et les acyclismes de rotation, l'amortisseur de torsion (11) étant centré par rapport au volant primaire (2) par l'intermédiaire de rondelles élastiques d'étanchéité (19), ledit double volant amortisseur (1) comprenant des moyens de limitation (22, 23) du déplacement axial d'un volant d'inertie par rapport à l'autre dans deux directions opposées parallèles à l'axe de rotation (X) des volants (2, 3), les volants d'inertie (2, 3) comprenant des moyeux (4, 12) équipés de butées complémentaires (22, 23) limitant le déplacement axial d'un volant par rapport à l'autre dans les deux directions précitées, **caractérisé en ce que** le moyeu (4) d'un des volants (2, 3) comporte une gorge (21) dans laquelle est monté fixement un jonc annulaire (22), le moyeu (14) de l'autre volant (3) comportant une gorge (23) dans laquelle le jonc annulaire (22) précité est inséré en partie et est axialement déplaçable de façon à limiter le déplacement axial d'un volant par rapport à l'autre par butée du jonc annulaire (22) contre les parois latérales (24) de la gorge (23) dudit autre volant (3).

2. Double volant amortisseur (1) selon la revendication 1, **caractérisé en ce que** le jonc annulaire (22) est monté fixe dans une gorge (21) du moyeu (4) du volant d'inertie primaire (2) et est axialement déplaçable dans une gorge (23) du moyeu (14) du volant d'inertie secondaire (3), cette dernière gorge (23) étant située radialement à l'intérieur du jonc annulaire (22).

3. Double volant amortisseur (1) selon l'une des revendications 1 à 2, **caractérisé en ce que** le volant primaire (2) est un volant axialement flexible.

4. Double volant amortisseur (1) selon l'une des revendications 1 à 3, **caractérisé en ce que** le déplacement axial d'un volant par rapport à l'autre est limité à 1 mm, préférentiellement à 0,7 mm.

5. Double volant amortisseur (1) selon l'une des revendications 1 à 4, **caractérisé en ce que** le jonc annulaire (22) est un jonc annulaire élastique fendu monté avec précontrainte dans la gorge précitée (21).

## Patentansprüche

1. Zweimassenschwingungsdämpfer (1), insbesondere für ein Kraftfahrzeug, welcher ein primäres Schwungrad (2), ein sekundäres Schwungrad (3) und einen Torsionsdämpfer (11) umfasst, der zwischen dem primären und dem sekundären Schwungrad (2, 3) angebracht ist, um ein Drehmoment zwischen den Schwungrädern (2, 3) zu übertragen und die Schwingungen und die Drehungleichförmigkeiten zu absorbieren und zu dämpfen, wobei der Torsionsdämpfer (11) bezüglich des primären Schwungrades (2) über elastische Dichtscheiben (19) zentriert ist, wobei der Zweimassenschwingungsdämpfer (1) Mittel zur Begrenzung (22, 23) der axialen Verschiebung eines Schwungrades bezüglich des anderen in zwei entgegengesetzten Richtungen, die zur Drehachse (X) der Schwungräder (2, 3) parallel sind, umfasst, wobei die Schwungräder (2, 3) Naben (4, 12) umfassen die mit zueinander komplementären Anschlägen (22, 23) ausgestattet sind, welche die axiale Verschiebung eines Schwungrades bezüglich des anderen in den zwei genannten Richtungen begrenzen, **dadurch gekennzeichnet, dass** die Nabe (4) eines der Schwungräder (2, 3) eine Rille (21) aufweist, in welcher ein Sicherungsring (22) fest angebracht ist, wobei die Nabe (14) des anderen Schwungrades (3) eine Rille (23) umfasst, in welcher der besagte Sicherungsring (22) teilweise eingesetzt ist und axial verschiebbar ist, derart, dass die axiale Verschiebung eines Schwungrades bezüglich des anderen durch Anschlag des Sicherungsringes (22) an den Seitenwänden (24) der Rille (23) des anderen Schwungrades (3) begrenzt wird.

2. Zweimassenschwingungsdämpfer (1) nach Anspruch 1, **dadurch gekennzeichnet, dass** der Sicherungsring (22) in einer Rille (21) der Nabe (4) des primären Schwungrades (2) fest angebracht ist und in einer Rille (23) der Nabe (14) des sekundären Schwungrades (3) axial verschiebbar ist, wobei sich diese letztere Rille (23) radial innerhalb des Sicherungsringes (22) befindet.

3. Zweimassenschwingungsdämpfer (1) nach einem der Ansprüche 1 bis 2, **dadurch gekennzeichnet, dass** das primäre Schwungrad (2) ein axial flexibles Schwungrad ist.

4. Zweimassenschwingungsdämpfer (1) nach einem der Ansprüche 1 bis 3, **dadurch gekennzeichnet, dass** die axiale Verschiebung eines Schwungrades bezüglich des anderen auf 1 mm, vorzugsweise auf 0,7 mm begrenzt ist.

5. Zweimassenschwingungsdämpfer (1) nach einem der Ansprüche 1 bis 4, **dadurch gekennzeichnet, dass** der Sicherungsring (22) ein geschlitzter elastischer Sicherungsring ist, der mit Vorspannung in der besagten Rille (21) angebracht ist.

## Claims

1. Dual mass flywheel (1) particularly for a motor vehicle, comprising a primary flywheel (2), a secondary flywheel (3) and a torsion damper (11) mounted between the primary and secondary flywheels (2, 3) to transmit torque between the flywheels (2, 3) and absorb and damp vibrations and acyclisms of rotation, the torsion damper (11) being centred with respect to the primary flywheel (2) by elastic sealing washers (19), the said dual mass flywheel (1) comprising means (22, 23) for limiting the axial movement of one flywheel with respect to the other in two opposite directions parallel to the axis of rotation (X) of the flywheels (2, 3), the flywheels (2, 3) comprising hubs (4, 12) equipped with complementary stops (22, 23) that limit the axial movement of one flywheel with respect to the other in the two aforementioned directions, **characterized in that** the hub (4) of one of the flywheels (2, 3) has a groove (21) in which an annular ring (22) is fixedly mounted, the hub (14) of the other flywheel (3) comprising a groove (23) in which the aforementioned annular ring (22) is partially inserted and can move axially so as to limit the axial movement of one flywheel with respect to the other by the annular ring (22) coming into abutment against the lateral walls (24) of the groove (23) of the said other flywheel (3).

2. Dual mass flywheel (1) according to Claim 1, **characterized in that** the annular ring (22) is fixedly mounted in a groove (21) of the hub (4) of the primary flywheel (2) and is axially moveable in a groove (23) of the hub (14) of the secondary flywheel (3), this latter groove (23) being situated radially on the inside of the annular ring (22).

3. Dual mass flywheel (1) according to one of Claims 1 and 2, **characterized in that** the primary flywheel (1) is an axially flexible flywheel.

4. Dual mass flywheel (1) according to one of Claims 1 to 3, **characterized in that** the axial movement of one flywheel with respect to the other is limited to 1 mm, preferably to 0.7 mm.

5. Dual mass flywheel (1) according to one of Claims 1 to 4, **characterized in that** the annular ring (22) is a split elastic annular ring mounted with preload in the aforementioned groove (21).
